# EUROPEAN PATENT SPECIFICATION

(11) **EP 1 800 574 B1**
(45) Date of publication and mention of the grant of the patent: **27.02.2008**
(21) Application number: 05425903.1
(22) Date of filing: 22.12.2005
(51) Int. Cl.: A47J 31/40

(54) **An assembly for automatically preparing and dispensing espresso coffee**
Vorrichtung zur automatischen Zubereitung von Espresso-Kaffee
Groupe pour la préparation et distribution automatique de café expresso

(43) Date of publication of application: 27.06.2007
(73) Proprietor: Gruppo Cimbali S.p.A., 20082 Binasco (MI) (IT)
(72) Inventor: Beretta, Maurizio, 20082 Binasco (MI) (IT)
(74) Representative: Perani, Aurelio

(56) References cited:
- EP-A- 1 306 041

## Description

The present invention relates to a dispensing assembly for automatically preparing and dispensing espresso coffee, of the type comprising:
a cylinder member which has a chamber for containing a predetermined measure of coffee grounds, which has a closed base and which is provided with an open top, and a piston member, which are provided, in alternative, either with an opening for dispensing the prepared beverage or with means for supplying heated pressurized water to the cylinder member in the chamber for preparing the beverage;
said cylinder member and said piston being pivotable relative to each other between a position for charging and discharging the measure of coffee grounds, before and after the beverage is dispensed, respectively, and a position in which the cylinder member and the piston member are in alignment;
said piston member being movable in relative terms in order to close and open the chamber by moving into and out of said cylinder member;
a pair of mutually opposing and spaced-apart walls defining an intermediate space in which the cylinder member and the piston member are received and supported;
a kinematic arrangement having a connecting rod and crank for pivoting said cylinder member or said piston member and for moving either said piston member or said cylinder member in the prescribed operating sequence, that kinematic arrangement comprising a pair of connecting rods which are connected, at one end, to the sides of said piston member or said cylinder member and, at the opposite end, to a respective crank which is supported by a respective wall of the opposing walls, the cranks being rotationally rigidly connected to each other;
and motor means for actuating at least one of said cranks and cam members for the angular movement of said cylinder member and said piston member.

Assemblies for dispensing espresso coffee of the above-mentioned type are known in the art and are generally used mainly in completely automatic machines for preparing and dispensing coffee, and sometimes also in association with dispensers for other types of beverage.

Exemplary constructions of such assemblies are disclosed in DE 19647385, in EP 1 306.041 and in US-A-4 681 028.

Within the context of the above-mentioned prior art, there have been developed various types of compact and economical dispenser, which may also be constructed from synthetic materials, for domestic machines and small automatic dispensers.

Selecting that structural solution is based mainly on the economy and ease of cleaning which plastics materials provide in comparison with metal materials, although they do have, when acted on by powerful stresses, the disadvantage of being subjected to high levels of resilient deformation which, over time, may also give rise to fatigue breakages of the material.

The ever-wider distribution of those dispensing assemblies has led to a search for a quality of preparation of the beverage which is increasingly similar to that which is obtained with the large professional machines, and therefore by working at high water temperatures and pressures which, as is known, for good extraction of the essences of coffee, are in the order of 90°C and approximately 9 bar, respectively.

At those operating temperatures and pressures, experience has shown that synthetic materials are further stressed beyond their resilient limits until they are subjected to abrupt breakages or permanent deformations.

The object of the present invention is to provide a structural solution for a dispensing assembly of the above-indicated type which overcomes the disadvantages set out in those assemblies constructed in accordance with the prior art.

The object is achieved with an assembly for dispensing espresso coffee which is characterized in accordance with claim 1 below.

The invention will now be described in greater detail with reference to one practical embodiment which is given purely by way of non-limiting example and which is illustrated with reference to the appended drawings, in which:
- Figure 1 is a perspective view of a dispensing assembly, in which there have been indicated the vectors of the forces which occur during operation and which can bring about deformations and breakages;

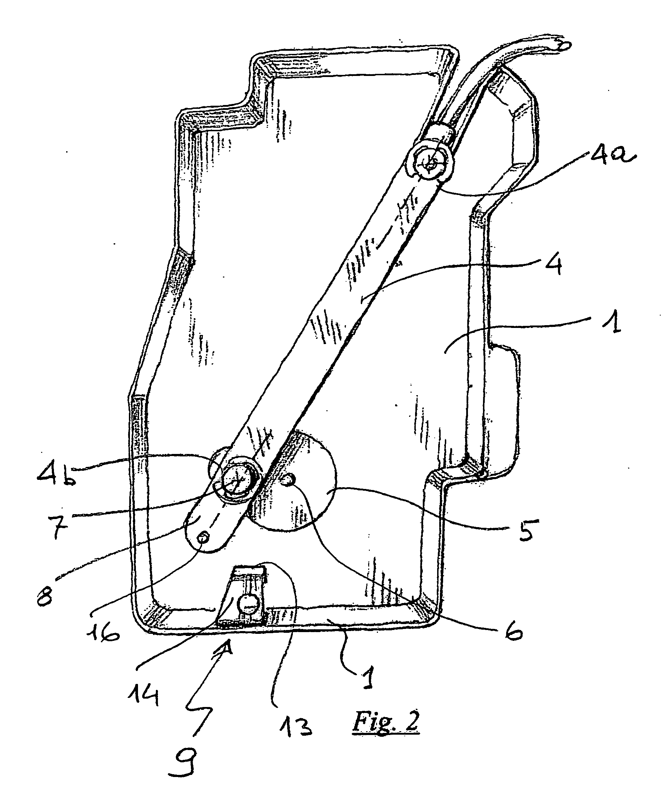

- Figure 2 is a perspective view of a side of a dispensing assembly with the kinematic actuation arrangement in accordance with the invention in a position in which the dispensing chamber has not yet been closed;

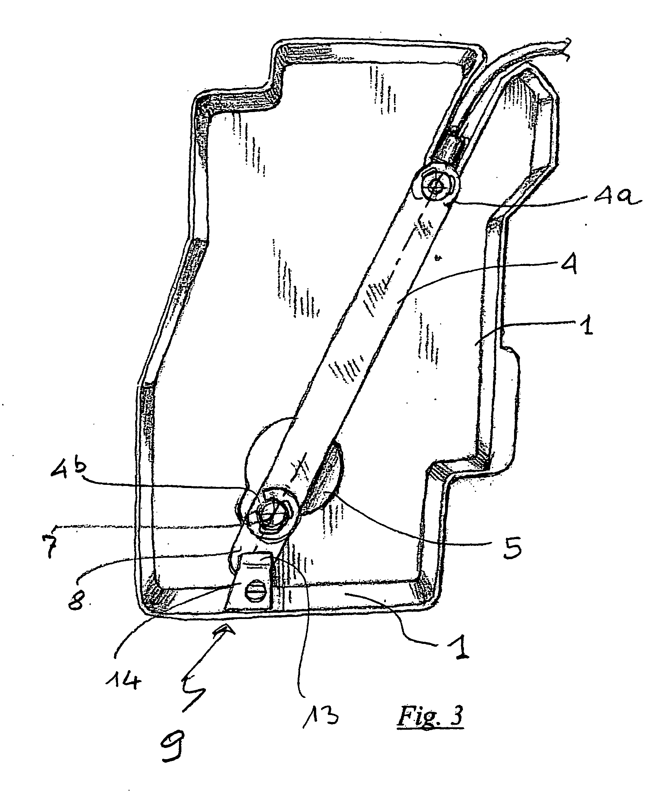

- Figure 3 is a perspective view of the same side of the dispenser of Figure 2, in which the kinematic arrangement is brought into the position which corresponds to closure of the dispensing chamber and in which pressurized water at high temperature is introduced;
- Figure 4 is a perspective view, drawn to an enlarged scale, of the abutment element in accordance with the invention in engagement with the end of the connecting rod of the kinematic arrangement.

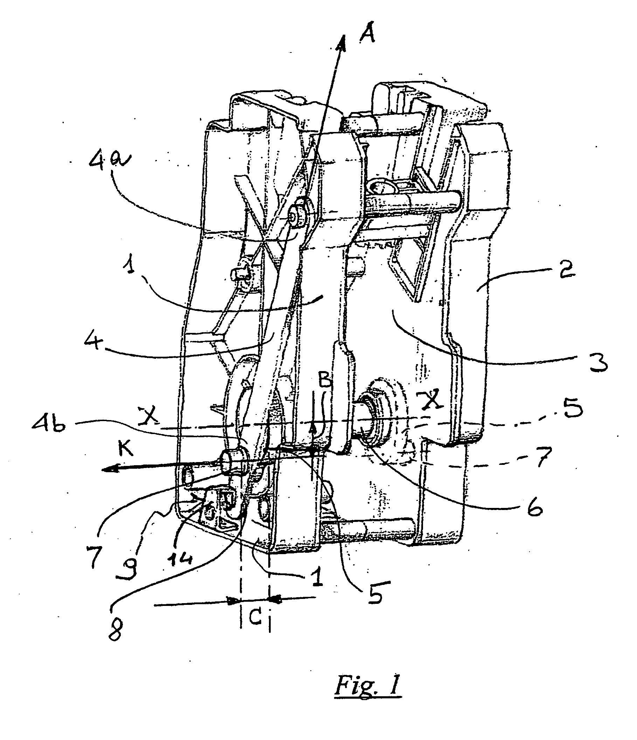

With reference to the above-mentioned Figures, and in particular Figure 1, it can be seen that the dispensing assembly comprises a pair of opposing walls 1 and 2, which are spaced apart from each other and define an intermediate space 3, in which there is received a cylinder member having a chamber for containing a predetermined measure of coffee grounds and a piston member for closing that chamber and for supplying the hot pressurized water necessary for preparing the beverage. The walls 1 and 2 are constructed by moulding suitable plastics materials.

Both the cylinder member and the piston member, which are conventional and described at length in the prior art and in particular in US-A-4 681 028, are not illustrated in the drawings.

In a conventional manner, the cylinder member is able to pivot between a position for charging and discharging the measure of coffee grounds, before and after the beverage is dispensed, respectively, and a position in which it is in alignment with the piston member.

The piston member, also in a conventional manner, is movable with respect to the cylinder member in order to close and open the dispensing chamber by moving into and out of the cylinder member.

The assembly comprises a kinematic arrangement having a connecting rod and crank and cam members for pivoting the cylinder member having a dispensing chamber and for moving the piston member in the prescribed operating sequence, respectively.

That kinematic arrangement comprises a pair of connecting rods, one of which is designated 4 in Figure 1.

The connecting rods are connected, in known manner, at one end 4a, to the sides of the piston member and, at the opposite end 4b, to a respective crank, such as that designated 5, which is supported by the respective wall 1.

The other crank, which is associated with the wall 2, is not visible in the drawings but, in known and conventional manner, is fixedly joined to the crank 5 by means of a common rotation shaft 6, whose axis is indicated by means of the line x-x in Figure 1. The electrical actuation motor is associated with the common shaft 6, in known manner, by means of suitable gear type connections which are not illustrated in the drawings since they are conventional.

With reference to Figure 1, the connecting rod 4 is fixed to the crank 5 in the region of the connecting rod knob 7 which is a distance B away from the axis of rotation of the crank. The crank, for structural reasons, is mounted with respect to the vertical wall 1 with a projection C relative to the support thereof.

During operation of the assembly with water pressure characteristic of Italian style espresso, approximately 9 bar, in the event of heated pressurized water being introduced into the chamber in which the measure of coffee grounds is located, the connecting rods of the kinematic arrangement are subjected to a tensile force which is applied along the longitudinal axis thereof, as indicated by vector A in Figure 1 with reference to the connecting rod 4.

Owing to the arms B and C and the reaction on the support of the shaft 6 of the crank 5 relative to the wall 1, the force A gives rise to a significant deformation of the crank 5 in the direction of arrow K indicated in Figure 1.

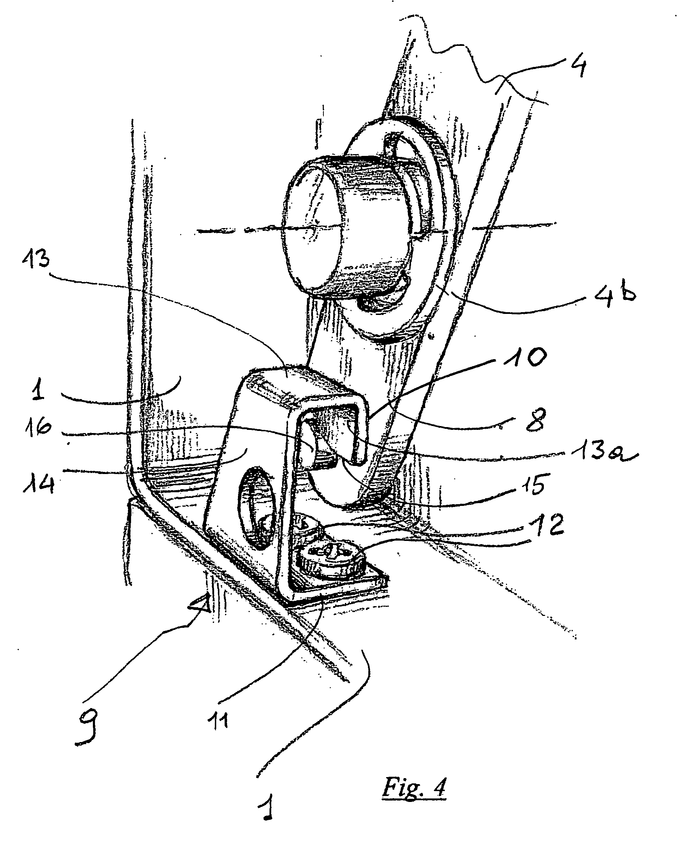

In accordance with the invention, in order to overcome the above-mentioned disadvantage, the connecting rod 4 comprises an axial extension portion 8 beyond the connecting rod knob 7. The relevant support wall 1 instead comprises an element, which is generally designated 9 and which can form an abutment 10, against which, as illustrated in Figure 4, the portion 8 of the connecting rod is supported when it is located in the position corresponding to closure of the dispensing chamber, opposing deformation K.

The abutment element 9 is constituted, in the example illustrated, by a substantially C-shaped profile-member, whose wing 11 is rigidly fixed to the wall 1 by means of screws 12.

The opposite wing 13 is bent by means of a portion 13a which is parallel with the central portion 14 of the C and also parallel with the plane of movement of the crank 5 and the connecting rod 4.

The element 9, with the free edge 15 of the bent portion 13a thereof, also brings about a second abutment, with which a pin 16 which is provided on the extension portion 8 of the connecting rod 4 engages.

In particular, the pin 16 is mounted on the extension 8 so as to be free to be able to rotate about the respective axis thereof. Since it is provided with a circular cross-section, it therefore behaves in the manner of a roller with respect to the edge 15.

In this manner, there is produced a kinematic structure such that, in the operating position in which deformations may come about, the occurrence thereof is opposed by means of a suitable support.

It is consequently possible to employ dispensing assemblies using plastics materials for the support structures and to obtain a preparation of espresso coffee with a quality generally comparable to that obtained with professional machines. The dimensions and materials can be freely selected in accordance with requirements, without thereby exceeding the scope of protection of the invention as claimed hereinafter.

## Claims

1. A dispensing assembly for automatically preparing and dispensing espresso coffee, of the type comprising:
a cylinder member which has a chamber for containing a predetermined measure of coffee grounds, which has a closed base and which is provided with an open top, and a piston member, which are provided, in alternative, either with an opening for dispensing the prepared beverage or with means for supplying heated pressurized water to the cylinder member (4) in the chamber (5) for preparing the beverage, said cylinder member and said piston being pivotable relative to each other between a position for charging and discharging the measure of coffee grounds, before and after the beverage is dispensed, respectively, and a position in which the cylinder member and the piston member are in alignment;
said piston member being movable in relative terms in order to close and open the chamber by moving into and out of said cylinder member;
a pair of mutually opposing and spaced-apart walls (1, 2) defining an intermediate space (3) in which the cylinder member and the piston member are received and supported; a kinematic arrangement having a connecting rod and crank for pivoting said cylinder member or said piston member and for moving either said piston member or said cylinder member in the prescribed operating sequence, that kinematic arrangement comprising a pair of connecting rods (4) which are connected, at one end (4a), to the sides of said piston member or said cylinder member and, at the opposite end (4b), to a respective crank (5) which is supported by a respective wall of the opposing walls (1, 2), the cranks being rotationally rigidly connected to each other;
and motor means for actuating at least one of said cranks and cam members for the angular movement of said cylinder member and said piston member, **characterized in that** at least one (4) of said pair of connecting rods comprises an axial extension portion (8), by means of which it extends longitudinally beyond the connection point (7) thereof with respect to the crank (5) and the relevant support wall (1) comprises an abutment element (9) which is positioned, outside the space (3) which is defined by said lateral walls (1, 2) of the assembly, in order to form at least a first abutment (10), with which said extension portion (8) of the connecting rod (4) engages when, during the rotation of the crank (5), it is in the position corresponding to closure of said chamber of the cylinder member by said piston member and the chamber is supplied with pressurized water in order to form the beverage, said abutment (10) acting on the extension portion (8) of the connecting rod in the direction perpendicular to the plane in which the rotation of the crank (5) and the movement of the connecting rod (4) are brought about.

2. An assembly according to claim 1, **characterized in that** said abutment element (9) also forms a second abutment (15) in the direction parallel with the plane of rotation of the crank (5) and plane of movement of the connecting rod (4).

3. An assembly according to claim 2, **characterized in that** said extension portion (8) of the connecting rod comprises a pin (16) which projects from the plane of said extension (8) in the direction perpendicular to the plane of movement of the connecting rod (4), said pin (16) being positioned in the extension (8) of the connecting rod in such a manner as to be located towards the outer side of the space (3) defined by the walls (1, 2) of the assembly and in engagement with said second abutment (15) when the extension portion (8) of the connecting rod is in frontal engagement with the first abutment (10).

4. An assembly according to claim 3, **characterized in that** said pin (16) is mounted on the extension (8) of the connecting rod so as to be free to be able to rotate about the respective longitudinal axis thereof and is provided with a cross-section perpendicular to the respective axis that is circular at least in the axial portion which is intended to engage with said second abutment (15) of the abutment element (9).

5. An assembly according to claims 1 to 4, **characterized in that** said abutment element (9) is constituted by a substantially C-shaped metal profile-member, one wing (11) of the C acting as a connection member with respect to said lateral wall (1) of the assembly and the opposite wing (13) forming, with the end portion (13a) thereof bent towards the other wing (11) parallel with the central portion (14) of the C, both the first (10) and the second (15) of said abutments.

## Patentansprüche

1. Ausgabevorrichtung zum automatischen Zubereiten und Ausgeben von Espressokaffe des Typs, der umfasst:
ein Zylinderelement, das eine Kammer zum Aufnehmen eines bestimmten Maßes an Kaffeepulver hat, die einen geschlossenen Boden aufweist und mit einer offenen Oberseite versehen ist, und einem Kolbenelement, die alternativ entweder mit einer Öffnung ausgebildet sind, um das zubereitete Heißgetränk auszugeben oder mit Mittel zum Zuführen von erhitzten unter Druck stehendem Wasser an das Zylinderelement (4) in der Kammer (5) zur Zubereitung des Heißgetränks, wobei das Zylinderelement und der Kolben relativ zueinander zwischen einer Position zur Aufnahme und Abgabe des Maßes an Kaffeepulver schwenkbar bewegbar sind, jeweils vor und nach der Ausgabe des Heißgetränks, und eine Position, in der das Zylinderelement und das Kolbenelement miteinander ausgerichtet sind;
wobei das Kolbenelement relativ bewegbar ist, um die Kammer zu öffnen und zu schließen, indem es in das Zylinderelement hineinbewegt und daraus hinausbewegt wird;
ein Paar zueinander abgewandter und beabstandeter Wände (1, 2), die einen dazwischen liegenden Raum (3) bilden, in dem das Zylinderelement und das Kolbenelement aufgenommen und gehalten werden;
eine kinematische Anordnung mit einer Verbindungsstange und einer Kurbel zum Schwenken des Zylinderelements oder des Kolbenelements und zum Bewegen des Kolbenelements oder des Zylinderelements in der vorgeschriebenen Betriebsfolge, wobei die kinematische Anordnung ein Paar von Verbindungsstangen (4) umfasst, die an einem Ende (4a) mit den Seiten des Kolbenelements oder Zylinderelements verbunden sind, und am abgewandten Ende (4b) mit einer zugehörigen Kurbel (5), die durch eine zugehörige Wand der abgewandten Wände (1,2) gehalten wird, wobei die Kurbeln drehbar fest miteinander verbunden sind;
und Motormittel zum Betreiben von mindestens einer der Kurbeln und Nockenelemente zur winkeligen Bewegung des Zylinderelements und des Kolbenelements, **dadurch gekennzeichnet, dass** zumindest eine Verbindungsstange (4) des Paars von Verbindungsstangen ein axiales Erweiterungsstück (8) umfasst, durch das es sich in der Längsrichtung über dessen Verbindungspunkt (7) bezüglich der Kurbel erstreckt, und wobei die zugehörige Haltewand (1) ein Widerlagerelement (9) enthält, das außerhalb des Raumes (3) angeordnet ist, der durch die Seitenwände (1, 2) der Vorrichtung definiert ist, um zumindest ein erstes Widerlager (10) zu bilden, in das das Erweiterungsstück (8) der Verbindungsstange (4) eingreift, wenn während dem Drehen der Kurbel (5) es sich in einer Position befindet, die dem Schließen der Kammer des Zylinderelements durch das Kolbenelement entspricht, und die Kammer mit unter Druck stehendem Wasser versorgt wird, um das Getränk zuzubereiten, wobei das Widerlager (10) auf ein Erweiterungsstück (8) der Verbindungsstange in Richtung senkrecht zur Ebene einwirkt, in der die Drehung der Kurbel (5) und die Bewegung des Verbindungsstabs (4) stattfinden.

2. Vorrichtung gemäß Anspruch 1, **dadurch gekennzeichnet, dass** das Widerlagerelement(9) auch ein zweites Widerlager (15) in der Richtung parallel zur Ebene der Drehung der Kurbel (5) und zur Ebene der Bewegung der Verbindungsstange (4) bildet.

3. Vorrichtung gemäß Anspruch 2, **dadurch gekennzeichnet, dass** das Erweiterungsstück (8) der Verbindungsstange einen Stift (16) umfasst, der aus der Ebene der Erweiterung (8) in die Richtung senkrecht zu Ebene der Bewegung der Verbindungsstange (4) verläuft, wobei der Stift (16) in der Erweiterung (8) der Verbindungsstange dergestalt positioniert ist, dass er sich in Richtung der Außenseite des durch die Wände (1, 2) der Vorrichtung definierten Raumes (3) befindet, und im Eingriff mit dem zweiten Widerlager (15) ist, wenn das Erweiterungsstück (8) des Verbindungsstabs sich im stirnseitigen Eingriff mit dem ersten Widerlager (10) befindet.

4. Vorrichtung gemäß Ansprach 3, **dadurch gekennzeichnet, dass** der Stift (16) an der Erweitenmg (8) der Verbindungsstange befestigt ist, um frei so um dessen zugehörige Längsachse rotieren zu können und mit einem, senkrecht zur zugehörigen Achse verlaufenden Querschnitt versehen ist, der zumindest in dem Achsenbereich ringförmig ist, der dazu dient, in das zweite Widerlager (15) des Widerlagerelements (9) einzugreifen.

5. Vorrichtung gemäß den Ansprüchen 1 bis 4, **dadurch gekennzeichnet, dass** das Widerlagerelement (9) aus einem im Wesentlichen C-förmigen Metallprofilelement besteht, wobei ein Schenkel (11) des C als Verbindungselement von dem Seitenwand (1) des Gehäuses mit dem abgewandten Schenkel (13) dient, der mit dem Endstück (13a) davon, das in Richtung des anderen Schenkels (11) parallel zum Mittenbereich (14) des C gebogen ist, sowohl das erste Widerlager (10) wie auch das zweite Widerlager (15) bildet.

## Revendications

1. Ensemble de distribution pour préparer et distribuer automatiquement un café expresso, du type comprenant:
un organe formant cylindre qui a une chambre pour contenir une mesure prédéterminée de marc de café, qui a une base fermée et qui est pourvu d'un dessus ouvert, et un organe formant piston, qui sont prévus, en variante, soit avec une ouverture pour distribuer la boisson préparée ou avec des moyens pour transmettre l'eau chauffée sous pression à l'organe formant cylindre (4) dans la chambre (5) pour préparer la boisson,
ledit organe formant cylindre et ledit piston étant aptes à pivoter l'un par rapport à l'autre entre une position pour charger et décharger la mesure de marc de café, avant et après que la boisson ne soit distribuée, respectivement, et une position dans laquelle l'organe formant cylindre et l'organe formant piston sont en alignement ;
ledit organe formant piston étant mobile de manière relative, afin de fermer et d'ouvrir la chambre en se déplaçant vers l'intérieur et vers l'extérieur dudit organe formant cylindre ;
une paire de parois mutuellement opposées et espacées (1, 2) définissant un espace intermédiaire (3) dans lequel l'organe formant cylindre et l'organe formant piston sont reçus et supportés ;
un agencement cinématique ayant une tige de raccordement et une manivelle pour faire pivoter ledit organe formant cylindre ou ledit organe formant piston et pour déplacer soit ledit organe formant piston, soit ledit organe formant cylindre selon la séquence de fonctionnement prescrite, cet agencement cinématique comprenant une paire de tiges de raccordement (4) qui sont raccordées, à une extrémité (4a), aux côtés dudit organe formant piston ou dudit organe formant cylindre et, à l'extrémité opposée (4b), à une manivelle respective (5) qui est supportée par une paroi respective des parois opposées (1, 2), les manivelles étant rigidement raccordées l'une à l'autre de façon à pouvoir tourner ;
et des moyens moteurs pour actionner au moins l'une desdites manivelles et des organes formant came pour le mouvement angulaire dudit organe formant cylindre et dudit organe formant piston, **caractérisé en ce que** au moins l'une (4) de ladite paire de tiges de raccordement comprend une partie de prolongement axiale (8), au moyen de laquelle elle s'étend longitudinalement au-delà du point de raccordement (7) de celle-ci par rapport à la manivelle (5) et la paroi de support appropriée (1) comprend un élément de butée (9) qui est positionné, à l'extérieur de l'espace (3) qui est défini par lesdites parois latérales (1, 2) de l'assemblage, afin de former au moins une première butée (10) avec laquelle ladite partie de prolongement (8) de la tige de raccordement (4) est en prise lorsque, pendant la rotation de la manivelle (5), elle est dans la position correspondant à la fermeture de ladite chambre de l'organe formant cylindre par ledit organe formant piston et la chambre est alimentée en eau sous pression afin de former la boisson, ladite butée (10) agissant sur la partie de prolongement (8) de la tige de raccordement dans la direction perpendiculaire au plan dans lequel la rotation de la manivelle (5) et le mouvement de la tige de raccordement (4) sont entraînés.

2. Assemblage selon la revendication 1, **caractérisé en ce que** ledit élément de butée (9) forme également une seconde butée (15) dans la direction parallèle au plan de rotation de la manivelle (5) et au plan de mouvement de la tige de raccordement (4).

3. Assemblage selon la revendication 2, **caractérisé en ce que** ladite partie de prolongement (8) de la tige de raccordement comprend une broche (16) qui fait saillie à partir du plan dudit prolongement (8) dans la direction perpendiculaire au plan de mouvement de la tige de raccordement (4), ladite broche (16) étant positionnée sur le prolongement (8) de la tige de raccordement d'une manière telle qu'elle est située vers le côté externe de l'espace (3) défini par les parois (1, 2) de l'assemblage et qu'elle est en prise avec ladite seconde butée (15) lorsque la partie de prolongement (8) de la tige de raccordement est en prise frontale avec la première butée (10).

4. Assemblage selon la revendication 3, **caractérisé en ce que** ladite broche (16) est montée sur le prolongement (8) de la tige de raccordement de sorte à être libre d'être capable de tourner autour de l'axe longitudinal respectif de celle-ci et est prévue avec une section transversale perpendiculaire à l'axe respectif qui est circulaire au moins dans la partie axiale qui est prévue pour être en prise avec ladite seconde butée (15) de l'élément de butée (9).

5. Assemblage selon les revendications 1 à 4, **caractérisé en ce que** ledit élément de butée (9) est constitué par un organe profilé en métal sensiblement en forme de C, une aile (11) du C servant d'organe de raccordement par rapport à ladite paroi latérale (1) de l'assemblage et l'aile opposée (13) formant, avec la partie d'extrémité (13a) de celle-ci pliée vers l'autre aile (11) de façon parallèle à la partie centrale (14) du C, à la fois la première (10) et la seconde (15) desdites butées.
